# FASCICULE DE BREVET EUROPEEN

(11) **EP 1 503 061 B1**
(45) Date de publication et mention de la délivrance du brevet: **22.03.2006**
(21) Numéro de dépôt: 04291908.4
(22) Date de dépôt: 27.07.2004
(51) Int. Cl.: F02C 7/18, F01D 25/12, F01D 5/08

(54) **Procédé de refroidissement, par air refroidi en partie dans un échangeur externe, des parties chaudes d'un turboréacteur, et turboréacteur ainsi refroidi.**
Verfahren zur Kühlung von heissen Turbinenbauteilen mittels eines teilweise in einem externen Wärmetauscher gekühlten Luftstromes und so gekühltes Turbinentriebwerk
Method for cooling hot turbine parts using air partly cooled by an external heat exchanger and correspondingly cooled gas turbine engine

(30) Priorité: 28.07.2003 FR 0309219
(43) Date de publication de la demande: 02.02.2005
(73) Titulaire: SNECMA, 75015 Paris (FR)
(72) Inventeur: Palmisano, Laurent, 91330 Yerres (FR); Jablonski, Laurent, 77000 Melun (FR)
(74) Mandataire: Barbin le Bourhis, Joel

(56) Documents cités:
- GB-A- 2 342 693
- US-A- 4 120 150
- US-A- 4 254 618
- US-A- 5 918 458

## Description

L'invention concerne le domaine des turboréacteurs et plus précisément le domaine du refroidissement des éléments les plus chauds des turboréacteurs.

Des progrès notables ont été réalisés dans les turboréacteurs, en ce qui concerne la diminution de la consommation de carburant et l'augmentation de la puissance spécifique, grâce à l'amélioration du cycle thermodynamique.

Cette amélioration a été obtenue notamment en augmentant la pression de l'air d'alimentation de la chambre de combustion et en augmentant la température à l'entrée de la turbine.

Mais l'augmentation de la température à . l'entrée de la turbine nécessite un refroidissement énergique des aubes du distributeur et des aubes du premier étage de la turbine haute pression qui entraîne le compresseur haute pression, ces aubes étant les pièces qui sont soumises aux plus hautes températures et à des contraintes élevées. Ce refroidissement est généralement réalisé par prélèvement d'un débit d'air sous pression dans le dernier étage du compresseur haute pression et ventilation des zones chaudes.

Dans les turboréacteurs modernes, qui ont un taux de compression élevé, les hautes pressions générées par le compresseur, qui sont favorables au rendement thermodynamique du moteur, entraînent une augmentation notable de la température de l'air délivré dans la chambre de combustion. Cette augmentation de température à la sortie du compresseur nécessite d'augmenter le débit de prélèvement d'air nécessaire au refroidissement de la turbine haute pression, ce qui détériore le rendement thermodynamique.

Pour remédier à cet inconvénient, il a déjà été proposé de refroidir le débit d'air prélevé dans un échangeur de chaleur dont le fluide froid est constitué par de l'air frais prélevé dans le flux secondaire, ou par un autre fluide, du carburant ou huile.

US 5 581 996 prévoit un prélèvement d'air dans la veine du diffuseur à l'entrée de la chambre de combustion. Ce prélèvement d'air est refroidi dans un échangeur de chaleur situé radialement à l'extérieur de la chambre de combustion, retourne ensuite vers l'intérieur du moteur via les aubes du distributeur qui sont ainsi refroidies, et sert au refroidissement des parties radialement internes de la chambre de combustion et éventuellement des aubes du premier étage de la turbine.

Ce document représente l'état de la technique la plus proche de l'invention, car il prévoit le refroidissement de la première roue de la turbine par un prélèvement d'air en sortie du diffuseur qui est refroidi dans un échangeur de chaleur et qui, après refroidissement, transite par les aubes du distributeur.

Toutefois, le prélèvement d'air se faisant dans la zone radialement externe de la veine de sortie du compresseur, il y a des risques d'encrassement de l'échangeur avec des poussières centrifugés. En outre, l'air refroidi transite par les aubes du distributeur, et sert au refroidissement des parois de ces aubes. Ceci se traduit par un réchauffement et une diminution du débit de l'air qui sera ensuite utilisé pour refroidir les aubes de la turbine.

Le but de l'invention est de pallier ces inconvénients et de fournir un débit d'air plus frais pour refroidir les aubes mobiles de la turbine.

L'invention concerne donc un procédé pour fournir un air de refroidissement dans les parties chaudes d'un turboréacteur comportant d'amont en aval un compresseur, un diffuseur, une chambre de combustion, un distributeur et une turbine entraînant ledit compresseur, procédé selon lequel on prélève un débit d'air dans le flux d'air délivré par le compresseur, on le refroidit dans un échangeur de chaleur situé radialement à l'extérieur de la chambre de combustion, on le dirige radialement vers l'intérieur à travers les aubes fixes du distributeur, et on ventile la roue mobile de la turbine.

Selon l'invention, le procédé est caractérisé par le fait que l'on prélève ledit débit d'air dans la zone du fond de chambre entourant le diffuseur, et par le fait que l'on ventile les aubes fixes du distributeur par un deuxième débit d'air prélevé en fond de chambre.

Ainsi, l'air de refroidissement étant prélevé dans la zone du fond de chambre entourant le diffuseur, cet air comporte une plus faible quantité de particules, ce qui limite l'encrassement de l'échangeur de chaleur. De plus, les aubes du distributeur étant ventilées par un deuxième débit d'air prélevé en fond de chambre, l'air refroidi s'échauffe moins lors de son transit à travers le distributeur et ne subit pas de prélèvement dans cette pièce.

Selon une autre caractéristique avantageuse de l'invention, on canalise sous la chambre de combustion une partie du débit d'air refroidi transitant par le distributeur vers le dernier étage du compresseur afin de ventiler l'alvéole de ce dernier.

Cette disposition permet d'améliorer la durée de vie du compresseur haute pression, notamment dans les turboréacteurs à usage militaire qui peuvent être soumis à des régimes très sévères pendant de courtes durées.

L'invention concerne également un turboréacteur comportant, d'amont en aval un compresseur, un diffuseur, une chambre de combustion, un distributeur et une turbine entraînant ledit compresseur, et comportant un premier circuit de refroidissement ayant des moyens de prélèvement d'air dans le flux délivré par le compresseur, un échangeur de chaleur situé radialement à l'extérieur de la chambre de combustion, et des moyens pour diriger l'air refroidi à travers les aubes fixes du distributeur afin de ventiler la roue mobile de la turbine, caractérisé par le fait que les moyens de prélèvement prélèvent le débit d'air dans la zone de fond de chambre entourant le diffuseur et par le fait qu'il comporte, en outre, un deuxième circuit pour le refroidissement des aubes fixes du distributeur qui prélèvent de l'air dans le fond de chambre.

Avantageusement, ce turboréacteur comporte en outre sous la chambre une canalisation pour amener une partie du débit transitant par le distributeur vers le dernier étage du compresseur.

D'autres avantages et caractéristiques de l'invention ressortiront à la lecture de la description suivante faite à titre d'exemple et en référence aux dessins annexés dans lesquels :
- la figure 1 est une représentation partielle et schématique du corps haute pression et de la chambre de combustion d'un turboréacteur comportant des moyens de refroidissement des zones chaudes conformes à l'invention ; et
- la figure 2 est semblable à la figure 1 et montre une variante de réalisation de la canalisation de transfert d'une fraction du débit d'air refroidi vers le dernier étage du compresseur à haute pression.

Les dessins montrent en partie le corps haute pression d'un turboréacteur d'axe X, qui comporte en amont d'une chambre de combustion annulaire 2 un rotor de compresseur 3, dont seul le dernier étage est représenté, entraîné au moyen d'un arbre 4 par un rotor de turbine 5, dont seule la première roue mobile est représentée.

De manière traditionnelle, le dernier étage du rotor de compresseur 3 comporte une couronne d'aubes mobiles 6, chargée de comprimer le flux primaire F1 circulant dans un canal annulaire, et disposée en amont d'une couronne fixe d'aubes redresseuses 7 qui délivre le flux primaire F1 dans la chambre de combustion 2, à travers un diffuseur 8.

La chambre de combustion annulaire 2 est délimitée par une paroi radialement intérieure 9 située radialement à l'extérieur d'un carter intérieur 10, et par une paroi radialement extérieure 11 située radialement à l'intérieur d'un carter extérieur 12.

Les parois 9 et 11 rejoignent respectivement les carters intérieur 10 et extérieur 12 à l'entrée d'un distributeur 13 qui comporte une pluralité d'aubes redresseuses 14 alimentant les aubes mobiles 15 de la première roue mobile 16 du rotor de turbine 5.

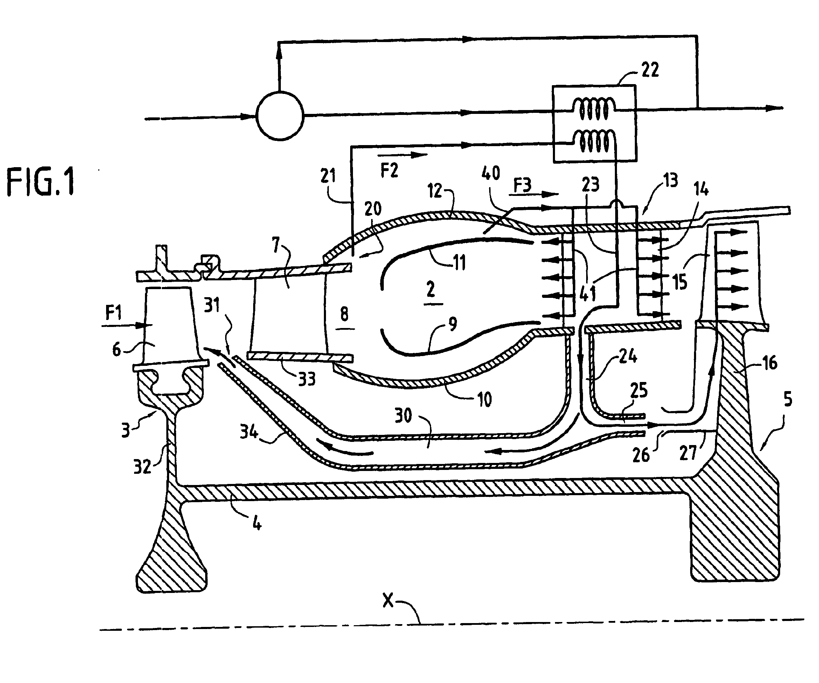

Une partie du flux d'air F1 délivré par le diffuseur 8 sert à la combustion du carburant délivré dans la chambre de combustion 2 par des injecteurs non montrés sur la figure 1. Une autre partie de cet air contourne les parois 9 et 11 de la chambre de combustion 2 et sert au refroidissement de ces parois soumises à de fortes températures, et des carters 10 et 12, avant d'être introduite dans la chambre 2 par des trous dits de dilution, ou de servir au refroidissement des stators de turbine et des rotors de turbine.

Le rôle du diffuseur 8 est de diminuer la vitesse d'écoulement du flux primaire F1 et par le fait même d'augmenter sa pression à l'entrée de la chambre de combustion 2.

Selon l'invention, un prélèvement d'air F2 est effectué en fond de chambre dans une zone 20 entourant le diffuseur 8. Le débit F2 est dirigé radialement vers l'extérieur par au moins un conduit 21, traverse un échangeur de chaleur 22, et retourne radialement vers l'intérieur du moteur, par des canaux 23 ménagés dans les aubes 14 du distributeur 13, pour aboutir dans une enceinte 24 disposée sous le distributeur 13, d'où une portion du débit d'air F2 est dirigée vers des injecteurs 25 disposés en regard de trous 26 ménagés dans le flasque amont 27 de la première roue mobile 16 de turbine, afin de refroidir cette roue 16 et notamment les aubes 15 de cette roue.

L'autre portion du débit F2 injecté dans l'enceinte 24 peut servir à refroidir d'autres éléments sous la chambre 2 et notamment l'alvéole du dernier étage du compresseur haute pression 3.

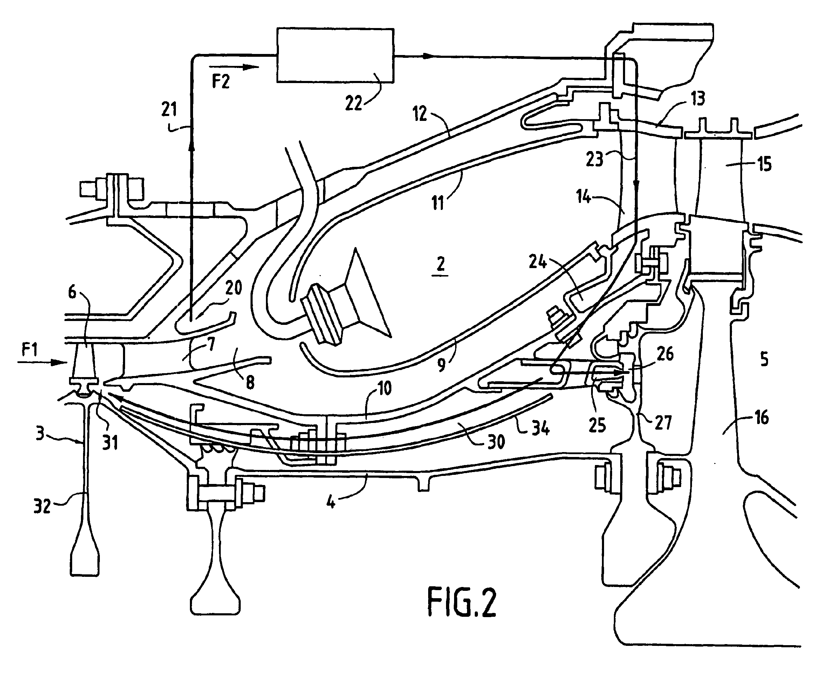

A cet effet, une canalisation 30 fixe relie l'enceinte 24 à la zone 31 séparant le disque du dernier étage du compresseur 3 et le carter intérieur 33 supportant les aubes redresseuses 7. Cette canalisation 30 peut être avantageusement annulaire et de révolution autour de l'axe X et délimitée radialement à l'extérieur par le carter intérieur 10, et radialement à l'intérieur par une virole 34, ainsi que cela est montré sur la figure 2. Elle pourrait également être réalisée par une pluralité de conduits s'étendant vers l'amont et répartis autour de l'axe X.

Selon une autre caractéristique de l'invention, montrée sur la figure 1, les aubes 14 du distributeur 13 sont refroidies par un deuxième circuit de refroidissement 40 qui prélève un débit d'air F3 dans la zone aval de l'espace séparant la paroi extérieure 11 et le carter extérieur 12, ce débit d'air F3 traversant des canaux 41 ménagés dans la paroi des aubes redresseuses 14 et séparés des canaux 23, et débouchant par des orifices sur les faces externes des aubes 14, notamment aux bords d'attaque et aux bords de fuite.

Grâce à cette dernière disposition, aucun prélèvement n'est réalisé dans le flux F2 pour refroidir les aubes 14 du distributeur 13, ce distributeur 13 étant essentiellement refroidi par le flux F3, et le flux F2 subit un échauffement moindre lors de la traversée des aubes 14.

Le fluide de refroidissement utilisé dans l'échangeur 22 peut être de l'air prélevé dans le flux secondaire du turboréacteur au moyen d'une écope. On peut aussi utiliser l'air de contrôle du jeu de turbine, ou l'huile des enceintes arrière comme source froide et éventuellement le carburant alimentant la chambre de combustion 2.

Dans le cas où la source froide de l'échangeur 22 est prélevée dans le flux secondaire d'un turboréacteur à double corps équipé d'une soufflante, le débit d'air peut être régulé dans les phases de vol où l'échangeur n'est plus nécessaire, par exemple en croisière.

Le système de refroidissement selon la présente invention est particulièrement destiné aux turboréacteurs dans lesquels le taux de compression global est élevé. Il s'applique également aux turboréacteurs à usage civil, double corps, double flux, équipés de soufflantes à grand taux de dilution, dans lesquelles la pression de l'air délivrée dans la chambre de combustion 2 peut atteindre 30 bars lors de la phase de décollage. Dans ces turboréacteurs, la température de l'air comprimé peut atteindre 700°C, et un refroidissement de l'air prélevé à cette température est nécessaire pendant toute la durée de la phase critique de décollage. En régime de croisière, la température de l'air comprimé s'abaisse de près de 300°C, et le refroidissement de l'air prélevé dans l'échangeur de chaleur 22 n'est plus nécessaire, ce qui améliore le rendement global du moteur à ce régime.

## Revendications

1. Procédé pour fournir un air de refroidissement dans les parties chaudes d'un turboréacteur comportant, d'amont en aval, un compresseur (3), un diffuseur (8), une chambre de combustion (2), un distributeur (13) et une turbine (5) entraînant ledit compresseur (3), procédé selon lequel on prélève un débit d'air (F2) dans le flux d'air (F1) délivré par le compresseur (3), on le refroidit dans un échangeur de chaleur (22) situé radialement à l'extérieur de la chambre de combustion (2), on le dirige radialement vers l'intérieur à travers les aubes fixes (14) du distributeur (13) et on ventile la roue mobile (16) de la turbine (5),
**caractérisé par le fait que** l'on prélève le débit d'air de refroidissement (F2) dans la zone (20) du fond de chambre entourant le diffuseur (8) et **par le fait que** l'on ventile les aubes fixes (14) du distributeur (13) par un deuxième débit d'air (F3) prélevé en fond de chambre.

2. Procédé selon la revendication 1, **caractérisé par le fait que** l'on canalise sous la chambre de combustion (2) une partie du débit d'air (F2) transitant par le distributeur (13) vers le dernier étage du compresseur (3) afin de ventiler l'alvéole de ce dernier.

3. Turboréacteur comportant, d'amont en aval, un compresseur (3), un diffuseur (8), une chambre de combustion (2), un distributeur (13) et une turbine (5) entraînant ledit compresseur (3), et comportant un premier circuit de refroidissement ayant des moyens de prélèvement d'air dans le flux (F1) délivré par le compresseur (3), un échangeur de chaleur (22) situé radialement à l'extérieur de la chambre de combustion (2), et des moyens pour diriger l'air refroidi à travers les aubes fixes (14) du distributeur (13) afin de ventiler la roue mobile (16) de la turbine (5), **caractérisé par le fait que** les moyens de prélèvement prélèvent le débit d'air (F2) dans la zone (20) du fond de chambre entourant !e diffuseur (8) et **par le fait qu'**il comporte, en outre, un deuxième circuit (40) pour le refroidissement des aubes fixes (14) du distributeur (13) qui prélève de l'air dans le fond de chambre.

4. Turboréacteur selon la revendication 3, **caractérisé par le fait qu'**il comporte en outre sous la chambre (2) une canalisation (30) pour amener une partie du débit d'air (F2) transitant par le distributeur (13) vers le dernier étage du compresseur (3).

## Patentansprüche

1. Verfahren zur Lieferung von Kühlluft in die heißen Teile eines Turbostrahltriebwerks, das von stromaufwärts nach stromabwärts einen Verdichter (3), einen Diffusor (8), eine Brennkammer (2), einen Verteiler (13) und eine den Verdichter (3) antreibende Turbine (5) umfaßt, Verfahren, nach dem eine Luftmenge (F2) aus dem durch den Verdichter (3) gelieferten Luftstrom (F1) entnommen wird, diese in einem radial außerhalb der Brennkammer (2) gelegenen Wärmetauscher (22) gekühlt und radial nach innen durch die festen Schaufeln (14) des Verteilers (13) gerichtet wird, und das bewegliche Rad (16) der Turbine (5) belüftet wird,
**dadurch gekennzeichnet, daß** die Kühlluftmenge (F2) aus dem Bereich (20) des Kammerbodens entnommen wird, der den Diffusor (8) umgibt, und daß die festen Schaufeln (14) des Verteilers (13) durch eine zweite, am Kammerboden entnommene Luftmenge (F3) belüftet werden.

2. Verfahren nach Anspruch 1, **dadurch gekennzeichnet, daß** unter der Brennkammer (2) ein Teil der Luftmenge (F2) kanalisiert wird, der über den Verteiler (13) zur letzten Stufe des Verdichters (3) gelangt, um deren Hohlraum zu belüften.

3. Turbostrahltriebwerk, das von stromaufwärts nach stromabwärts einen Verdichter (3), einen Diffusor (8), eine Brennkammer (2), einen Verteiler (13) und eine den Verdichter (3) antreibende Turbine (5) umfaßt, und das einen ersten Kühlkreis umfaßt, der Mittel zur Entnahme von Luft aus dem durch den Verdichter (3) gelieferten Strom (F1), einen Wärmetauscher (22), der radial außerhalb der Brennkammer (2) gelegen ist, sowie Mittel aufweist, um die gekühlte Luft durch die festen Schaufeln (14) des Verteilers (13) zu leiten, um das bewegliche Rad (16) der Turbine (5) zu belüften, **dadurch gekennzeichnet, daß** die Entnahmemittel die Luftmenge (F2) aus dem Bereich (20) des Kammerbodens entnehmen, welcher den Diffusor (8) umgibt, und daß es weiterhin einen zweiten Kreis (40) für die Kühlung der festen Schaufeln (14) des Verteilers (13) aufweist, der Luft aus dem Kammerboden entnimmt.

4. Turbostrahltriebwerk nach Anspruch 3, **dadurch gekennzeichnet, daß** es ferner unter der Kammer (2) eine Rohrleitung (30) aufweist, um einen Teil der Luftmenge (F2) zuzuführen, der über den Verteiler (13) zur letzten Stufe des Verdichters (3) gelangt.

## Claims

1. A method of delivering cooling air to the hot portions of a turbojet that comprises, from upstream to downstream: a compressor (3); a diffuser (8); a combustion chamber (2); a distributor (13); and a turbine (5) driving said compressor (3), in which method, a flow of air (F2) is bled from the flow of air (F1) delivered by the compressor (3), which bled-off flow is cooled in a heat exchanger (22) situated radially outside the combustion chamber (2), and is then directed radially inwards via stationary blades (14) of the distributor (13) and used to cool the moving wheel (16) of the turbine (5),
the method being **characterised by** the fact that the cooling air flow (F2) is bled from the zone (20) at the end of the combustion chamber surrounding the diffuser (8), and by the fact that the stationary blades (14) of the distributor (13) are cooled by a second air flow (F3) bled from the end of the combustion chamber.

2. A method according to claim 1, **characterised by** the fact that a fraction of the flow of air (F2) passing through the distributor (13) is channeled beneath the combustion chamber (2) towards the last stage of the compressor (3) in order to cool the cavity thereof.

3. A turbojet comprising, from upstream to downstream: a compressor (3); a diffuser (8); a combustion chamber (2); a distributor (13); and a turbine (5) driving said compressor (3); the turbojet further comprising a first cooling circuit having means for bleeding air from the flow (F1) delivered by the compressor (3), a heat exchanger (22) situated radially outside the combustion chamber (2), and means for directing the cooled air through the stationary blades (14) of the distributor (13) in order to cool the moving wheel (16) of the turbine (5), **characterised by** the fact that the bleed means bleed the flow of air (F2) from the zone (20) of the end of the combustion chamber that surrounds the diffuser (8), and by the fact that it further comprises a second circuit (40) for cooling the stationary blades (14) of the distributor (13) which bleeds air from the end of the combustion chamber.

4. A turbojet according to claim 3, **characterised by** the fact that it further comprises a channel (30) beneath the combustion chamber (2) to bring a fraction of the flow of air (F2) passing through the distributor (13) towards the last stage of the compressor (3).
